# EUROPÄISCHE PATENTSCHRIFT

(11) **EP 1 028 144 B1**
(45) Veröffentlichungstag und Bekanntmachung des Hinweises auf die Patenterteilung: **16.04.2003**
(21) Anmeldenummer: 00100801.0
(22) Anmeldetag: 17.01.2000
(51) Int. Cl.: C08L 79/04, C08L 63/00, C08G 59/40, C08G 59/70, C08L 79/08, C08K 5/00

(54) **Cyanatharze und Epoxidverbindungen enthaltende härtbare Mischungen**
Curable compositions comprising cyanate resins and epoxy compounds
Compositions durcissables contenant des résines cyanate te des composés epoxy

(30) Priorität: 09.02.1999 DE 19905448
(43) Veröffentlichungstag der Anmeldung: 16.08.2000
(73) Patentinhaber: Bakelite AG, 58642 Iserlohn-Letmathe (DE)
(72) Erfinder: Schillgalies, Jürgen, Dr., 4744 Moers (DE); Reichwein, Heinz-Günter, 47475 Kamp-Lintfort (DE); Palinsky, Andreas, Dr., 47137 Duisburg (DE); Kaffee, Achim, 42719 Solingen (DE)

(56) Entgegenhaltungen:
- WO-A-91/13925
- WO-A-96/17020
- WO-A-97/47689

## Beschreibung

Die Erfindung betrifft härtbare Mischungen, die Cyanatharze und Epoxidverbindungen enthalten.

Derartige Mischungen sind an sich bekannt. Da die aus ihnen hergestellten gehärteten Produkte flammwidrig sind und ausgezeichnete mechanische und elektrische Eigenschaften haben, werden sie insbesondere zur Herstellung von hochwertigen Elektrolaminaten eingesetzt.

Aus US-A 3 562 214 ist bekannt, aromatische Cyanatester und mehrfunktionelle Epoxidverbindungen ohne Zusatz von Härtungsmitteln bei Temperaturen im Bereich von 180°C zu härten. Dabei erfolgt zwar eine Reaktion zwischen den Harzen. Eine vollständige Aushärtung der Produkte wird damit jedoch nicht erreicht, so daß in der Fachwelt die Verwendung von Härtungskatalysatoren als notwendig angesehen wird.

Gemäß US-A 4 477 629 werden aromatische Cyanatester mit Epoxidharzen in Anwesenheit von Härtungs-Katalysatoren vernetzt. Bevorzugte Härter sind Kobaltoctoat und -naphthenat. Die Härtung erfolgt bei Temperaturen im Bereich von 70-350°C.

Nach US-A 4 612 359 werden Mischungen aus Cyanatestern, Cyanamiden und Epoxidharzen mit Hilfe von sauren Katalysatoren wie z.B. Bortrifluorid-Etherat gehärtet.

Aus EP-B 0 794 979 ist bekannt, Diazabicyclo[2,2,2]-octan, Catechol, 1,1-Dimethyl-3-phenylhamstoff, Imidazole, Alkylphenole sowie Schwermetallsalze, wie -octoate, -acetylacetonate oder -naphthenate als Härtungskatalysatoren für Mischungen aus aromatischen Cyanatharzen und Epoxidharzen einzusetzen.

Alle diese Mischungen haben den Nachteil, daß ihre Viskosität, insbesondere bei Verarbeitungstemperatur, sehr schnell ansteigt, so daß z.B. bei der Imprägnierung von Fasern und Geweben die einheitliche Benetzung der Fasern nicht mehr gegeben ist. Daraus resultieren Schwachstellen in den mit diesen Mischungen hergestellten Produkten.

Es ist daher Aufgabe der Erfindung, Mischungen auf Basis von Cyanatharzen und Epoxidverbindungen bereitzustellen, die auch bei Verarbeitungstemperatur einen geringeren Anstieg der Viskosität zeigen und somit längere Verarbeitungszeiten ermöglichen, die aber bei den für diese Mischungen üblichen Härtungstemperaturen mit gleichen Härtungsgeschwindigkeiten zur vollständigen Aushärtung der entsprechenden Produkte führen.

Die Lösung der Aufgabe erfolgt durch Mischungen aus Cyanatharzen und Epoxidverbindungen, die als Härter Metallkomplexverbindungen der allgemeinen Formeln ML_{X}B_{Y}, M[SR]_{X}B_{Z}, M[SR]_{X}(N)ₙ, M(PHal)ₘ oder M(PHal)ₘ(N)ₙ enthalten, gemäß der Ansprüche 1 bis 4. Diese Mischungen sind einsetzbar zur Herstellung von hochwertigen Elektrolaminaten. Sie eröffnen jedoch auch neue Anwendungsmöglichkeiten wie z.B. die Anwendung in Injektionsverfahren gemäß Anspruch 6 oder die Verwendung als Tränkharze in Wickelverfahren zur Herstellung rotationssymmetrischer Formkörper gemäß Anspruch 7.

Es wurde gefunden, daß Metallkomplexverbindungen der allgemeinen Formeln I bis V

ML_{X}B_{Y}, M[SR]_{X}B_{Z}, M[SR]_{X}(N)ₙ, M(PHal)ₘ oder M(PHal)ₘ(N)ₙ,

worin
- M: ein Kation eines komplexbildenden Metalls
- SR: ein organischer oder anorganischer Säurrest
- L: ein chelatbildender Ligand
- B: eine Lewis-Base
- PHal: ein Ion eines Pseudohalogenids
- N: eine Stickstoffbase
- x: eine Zahl von 1 bis 8
- y: eine Zahl von 1 bis 5
- z: eine Zahl von 7 bis 8
- m: eine Zahl von 2 bis 3
- n: eine Zahl von 1 bis 2
bedeuten,
die Härtung von Mischungen aus Cyanatharzen und Epoxidverbindungen sehr gut katalysieren, daß die entsprechenden katalysatorhaltigen Mischungen aber eine wesentlich verbesserte Verarbeitbarkeitszeit haben. Es ist dadurch möglich, Verarbeitungszeiten bei Verarbeitungstemperatur von bis zu 10 h einzustellen. Damit ist ein großer Produktionsvorteil erreicht, indem ein Harz-Härter-Ansatz während eines Arbeitscyclus verarbeitbar ist.

Die genannten Komplexe sind als Härtungskatalysatoren für die Härtung von Epoxidharzen bekannt,
wobei die Komplexe der Formeln ML_{X}B_{Y} und M[SR]_{X}B_{Z} erstmals in WO 91/13925 beschrieben sind, und die Komplexe der Formeln M(PHal)ₘ und M(PHal)ₘ(N)ₙ aus der älteren deutschen Anmeldung der Anmelderin 198 48 329.5 bekannt sind.

Es ist überraschend, daß diese Komplexverbindungen nicht nur die Härtung der Epoxidverbindungen katalysieren sondern auch die Vernetzung der Cyanatharze mit den Epoxidverbindungen. Es bildet sich somit nicht, wie der Fachmann erwarten würde, eine Epoxidharzmatrix mit eingelagertem Cyanatharz, sondern ein neues Copolymer, in dem diese beiden Harzkomponenten miteinander vernetzt sind.

Dabei haben die Katalysatoren der Formeln M(PHal)ₘ und M(PHal)ₘ(N)ₙ den zusätzlichen Vorteil daß die Glasübergangstemperaturen (T_{g}-Werte) der mit ihnen gehärteten Mischungen um 5 bis 15°C erhöht sind.

Wie aus EP-B 0 794 979 bekannt, werden in der Praxis die T_{g}-Werte von Cyanatharz/Epoxidharz-Polymeren dadurch erhöht, daß den entsprechenden Mischungen aus Cyanatharz und difunktionellen Epoxidharzen zusätzlich tri- oder tetrafunktionelle Epoxidverbindungen zugegeben werden. Dadurch wird aber die Elastizität der an sich schon spröden Polymere noch weiter erniedrigt.

Wenn nun bereits mit Hilfe der Härtungskatalysatoren höhere T_{g}-Werte erzielt werden, so kann, um T_{g}-Werte gemäß dem Stand der Technik zu erreichen, die Menge der zugegebenen tri- oder tetrafunktionellen Epoxidverbindungen reduziert werden. Dies hat wirtschaftliche Vorteile und zudem wird dadurch die Elastizität der gehärteten Polymere verbessert.

Die erfindungsgemäß eingesetzten Metallkomplexverbindungen werden den Mischungen aus Cyanatharz und Epoxidverbindungen in einer Menge von 0,05 bis 10 Gew.%, bezogen auf die Summe aus Cyanatharz und Epoxidverbindungen, zugemischt. Die so erhaltenen Mischungen sind bei Raumtemperatur mehrere Tage lang lagerstabil, ohne daß die Viskosität nennenswert ansteigt. Bei Verarbeitungstemperaturen im Bereich von 40-50°C erfolgt ein langsamer Viskositätsanstieg, so daß die entsprechenden Mischungen noch nach mehreren Stunden verarbeitbar sind und auch eine gute Benetzung und Imprägnierung von Fasern und Geweben ergeben. Dadurch ermöglichen diese Härter den Einsatz von Mischungen aus Cyanatharz und Epoxidverbindungen zur Herstellung von Formmassen für RTM-, RIM- und vergleichbare Formgebungsverfahren.

Als Cyanatharze können alle Verbindungen der allgemeinen Formel VI

R(O-C≡N)ₙ

eingesetzt werden, wobei R ein ein- oder mehrkerniger aromatischer oder alkylaromatischer substituierter oder unsubstituierter Rest ist und n eine Zahl größer 1, wie sie auch aus dem zitierten Stand der Technik bekannt sind.

Die bevorzugten Cyanatharze sind solche der allgemeinen Formel VII 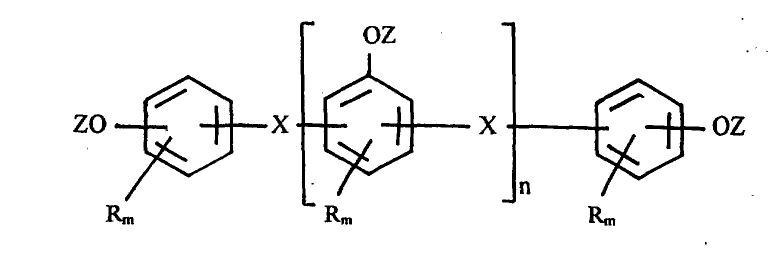 wobei
Z = -CN oder Wasserstoff
X = ein divalenter organischer Rest, insbesondere -CH₂, -C(CH₃)₂ oder -(CH₃)(C₂H₅),
R = ein unter Härtungsbedingungen nicht reaktiver organischer Rest, wie z.B. ein Alkyl- oder Halogenrest oder Ether- oder Estergruppen
m = eine Zahl von 0 bis 4
n = eine Zahl von 0 bis 10.

Insbesondere bevorzugt sind Cyanatharze der allgemeinen Formel VIII 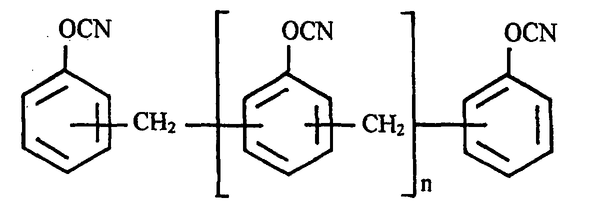 wobei n = 0 bis 5.

Diese Harze können Triazine enthalten. Sie sind unter der Bezeichnung Primaset® im Handel.

Als Epoxidverbindungen können alle Epoxidverbindungen mit mehr als einer Epoxidgruppe im Molekül eingesetzt werden. Bevorzugt werden difunktionelle Epoxidverbindungen. Zur Erhöhung des T_{g}-Wertes des ausgehärteten Polymers werden diese mit tri-, tetra- oder höherfunktionellen Epoxidverbindungen vermischt. Als höherfunktionelle Epoxidverbindung dienen insbesondere Polyglycidylether von Novolaken.

Überraschenderweise wurde gefunden, daß mit den erfindungsgemäßen Mischungen aus Cyanatharzen und Epoxidverbindungen eine weitere Erhöhung des T_{g}-Wertes der ausgehärteten Polymere erzielt wird, wenn als Epoxidverbindungen die reinen Diglycidylether der Bisphenole eingesetzt werden.
Diese Diglycidylether der Bisphenole werden in an sich bekannter Weise durch Umsetzung der entsprechenden Bisphenole mit Epichlorhydrin hergestellt. Nach der Umsetzung werden sie einer Destillation unterworfen und damit von allen Verunreinigungen, insbesondere von höhermolekularen Harzmolekülen getrennt. Außerdem sind die resultierenden destillierten Diglycidylether wasserfrei, während normalerweise Epoxidharze einen Wassergehalt von etwa 0,1% haben.

Als Bisphenole sind alle Verbindungen der allgemeinen Formel IX 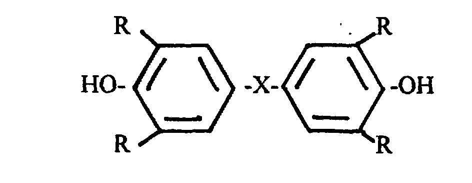 einsetzbar,
wobei X = -CH₂, -C(CH₃)₂, -C -C(CH₃)(C₂H₅), ein fünf- oder sechsgliedriger cyclischer Kohlenwasserstoffrest-, -S, oder -SO₂
und R = -H, -CH₃ oder -Br.
Die bevorzugten Bisphenole sind Bisphenol A und Bisphenol F.

Da durch Einsatz der reinen Diglycidylether der Bisphenole die T_{g}-Werte der gehärteten Polymere zusätzlich erhöht werden, ist bei ihrer Verwendung eine weitere Reduzierung des Gehalts der Mischungen an tri- oder höherfunktionellen Epoxidverbindungen möglich. Damit wird eine weitere Verbesserung der Elastizität der ausgehärteten Polymere erreicht.

Durch den Einsatz reiner Diglycidylether der Bisphenole in Kombination mit den erfindungsgemäßen Härter wird als ein weiterer überraschender Vorteil erreicht, daß die Schrumpfung der erfindungsgemäßen Mischungen geringer ist als bei Cyanat/Epoxid-Harz-Mischungen gemäß dem Stand der Technik. Außerdem haben diese Diglycidylether und damit die mit ihnen hergestellten Mischungen eine geringere Viskosität. Dies ist insbesondere wichtig bei der Verwendung der Mischungen als Tränkharze in Wickelverfahren, da bei dieser Anwendung die Temperatur der Tränkharze möglichst 5-10°C niedriger gehalten wird als bei anderen Imprägnieranwendungen.

Die erfindungsgemäßen Mischungen können Cyanatharze und Epoxidverbindungen in den Mischungsverhältnissen 10 bis 90 zu 90 bis 10 Gew.% enthalten. Aus wirtschaftlichen Gründen werden die Mischungen jedoch so gewählt, daß sie 10 bis 50 Gew.%, bevorzugt 10 bis 40 Gew.% Cyanatharz enthalten.

Die erfindungsgemäßen Mischungen können ferner weitere Füll- und Zusatzstoffe, wie Härter, Lösemittel, zusätzliche Harze, Beschleunigungs- oder Verzögerungsmittel enthalten.

### Beispiele

Durch Vermischen bei 45°C werden Mischungen aus Cyanatharz, Epoxidverbindung und Härter hergestellt.
Von diesen Mischungen wird die Anfangsviskosität und die Viskosität nach verschiedenen Lagerzeiten bei 45°C bestimmt.

Teile der Mischungen werden nach folgendem Temperaturcyclus gehärtet: 75 min bei 100°C, 90 min bei 130°C, 150 min bei 150°C und 240 min bei 210°C.
Danach werden die T_{g}-Werte bestimmt.

Die erhaltenen Ergebnisse sind in der Tabelle zusammengefaßt.

Als Harzkomponenten werden eingesetzt:
Cyanatharz: Ein handelsüblicher Polyphenolcyanatester der allgemeinen Formel VIII mit n ≈ 2,6.

Epoxidharz: Ein handelsübliches Epoxidharz auf Basis Bisphenol F mit einem Epoxyäquivalent von 172 und einer Viskosität bei 25°C von 4500 mPas.

Bisphenol A, frisch destilliert, wasserfrei.

Die eingesetzten Härter sind:
ZnOct : Handelsübliches Zinkdioctoat
ZnPHalMIM: Bis(1-Methylimidazol)-zink(II)-di-cyanat, hergestellt durch Umsetzung der wäßrigen Lösungen von Zinkchlorid mit Natriumcyanat und 1-Methylimidazol in stöchiometrischem Verhältnis.
Zn(Oct)MIM: Bis(1-Methylimidazol)-zink(II)-di-octoat, hergestellt bei 40°C durch direkte Umsetzung von Zinkoctoat mit 1-Methylimidazol im stöchiometrischen Verhältnis.
Zn(Ac)MIM: Bis(1-Methylimidazol)-zink(II)-di-acetylacetonat, hergestellt gemäß DD 292 463

Alle Mengenangaben sind Angaben in Gewichtsteilen (GT).

Zusammensetzung der Mischungen:

### Beispiel 1 (außerhalb Anspruch 1)

| | |
|---|---|
| Bisphenol A | 30 GT |
| Cyanatharz | 20 GT |
| ZnPHalMIM | 0,13 GT |

### Beispiel 2 (Vergleichsbeispiel)

| | |
|---|---|
| Bisphenol A | 30 GT |
| Cyanatharz | 20 GT |
| ZnOct | 0,1 GT |

### Beispiel 3

| | |
|---|---|
| Epoxidharz | 30 GT |
| Cyanatharz | 20 GT |
| ZnPHalMIM | 0,13 GT |

### Beispiel 4 (Vergleichsbeispiel)

| | |
|---|---|
| Epoxidharz | 30 GT |
| Cyanatharz | 20 GT |
| ZnOct | 0,1 GT |

### Beispiel 5

| | |
|---|---|
| Epoxidharz | 30 GT |
| Cyanatharz | 20 GT |
| Zn(Oct)MIM | 0,13 GT |

### Beispiel 6 (Vergleichsbeispiel)

| | |
|---|---|
| Epoxidharz | 30 GT |
| Cyanatharz | 20 GT |
| ZnOct | 0,05 GT |
| 1-Methylimidazol | 0,05 GT |

### Beispiel 7

| | |
|---|---|
| Epoxidharz | 30 GT |
| Cyanatharz | 20 GT |
| Zn(Ac)MIM | 0,13 GT |

Ergebnisse:

**Tabelle:**

| Viskosität [mPas] nach Lagerung bei 45°C von | | | | | | | |
|---|---|---|---|---|---|---|---|
| Beispiel | T_{g}[°C] | 0 min | 30 min | 105 min | 165 min | 215 min | 17 h |
| 1 | 177 | 1520 | 1640 | 1800 | 1960 | 2040 | 5200 |
| 2 | 168 | 1520 | 1800 | 2480 | 3020 | 3520 | 18500 |
| 3 | 170 | 2000 | 2000 | 2400 | 2760 | 2840 | 8700 |
| 4 | 155 | 2000 | 3120 | 3680 | 4480 | 4980 | 25600 |
| 5 | | 2000 | 2350 | 2720 | 2940 | 3160 | |
| 6 | | 2000 | 3100 | 3720 | 4620 | 5240 | |
| 7 | | 2000 | 2500 | 2840 | 3010 | 3260 | |

## Patentansprüche

1. Härtbare Mischungen, die Cyanatharze und Epoxidverbindungen enthalten, **dadurch gekennzeichnet, daß** sie als Härter Metallkomplexverbindungen der allgemeinen Formeln
ML_{X}B_{Y}, M[SR]_{X}B_{Z}, M[SR]_{X}(N)ₙ, M(PHal)ₘ oder M(PHal)ₘ(N)ₙ
enthalten,
worin
M ein Kation eines komplexbildenden Metalls
SR ein organischer oder anorganischer Säurrest
L ein chelatbildender Ligand
B eine Lewis-Base
PHal ein Ion eines Pseudohalogenids
N eine Stickstoffbase
x eine Zahl von 1 bis 8
y eine Zahl von 1 bis 5
z eine Zahl von 7 bis 8
m eine Zahl von 2 bis 3
n eine Zahl von 1 bis 2
bedeuten.

2. Mischungen nach Anspruch 1, **dadurch gekennzeichnet, daß** sie als Epoxidverbindungen Diglycidylether der Bisphenole enthalten.

3. Mischungen nach Anspruch 2, **dadurch gekennzeichnet, daß** sie als Epoxidverbindungen Diglycidylether des Bisphenols A oder Bisphenols F enthalten.

4. Mischungen nach den Ansprüchen 1 bis 3, **dadurch gekennzeichnet, daß** sie als Epoxidverbindungen Diglycidylether des Bisphenols A oder Bisphenols F und als Härter Metallkomplexverbindungen der allgemeinen Formel M(PHal)ₘ und M(PHal)ₘ(N)ₙ enthalten.

5. Verwendung der Mischungen gemäß der Ansprüche 1 bis 4 zur Herstellung von hochwertigen Elektrolaminaten.

6. Verwendung der Mischungen gemäß der Ansprüche 1 bis 4 zur Herstellung von Formmassen für RTM-, RIM- und vergleichbare Formgebungsverfahren.

7. Verwendung der Mischungen gemäß der Ansprüche 1 bis 4 als Tränkharze in Wickelverfahren.

## Claims

1. Curable mixtures which comprise cyanate resins and epoxy compounds, **characterized in that** they comprise metal complex compounds of the general formulae
MLₓB_{y}, M[SR]ₓB_{z}, M[SR]ₓ(N)ₙ, M(PHal)ₘ or M(PHal)ₘ(N)ₙ
as hardeners,
where
M is a cation of a complex-forming metal
SR is an organic or inorganic acid radical
L is a chelate-forming ligand
B is a Lewis base
PHal is a pseudohalide ion
N is a nitrogen base
x is a number from 1 to 8
y is a number from 1 to 5
z is a number from 7 to 8
m is a number from 2 to 3
n is a number from 1 to 2.

2. Mixtures according to Claim 1, **characterized in that** they comprise diglycidyl ethers of the bisphenols as epoxy compounds.

3. Mixtures according to Claim 2, **characterized in that** they comprise diglycidyl ethers of bisphenol A or of bisphenol F as epoxy compounds.

4. Mixtures according to Claims 1 to 3, **characterized in that** they comprise diglycidyl ethers of bisphenol A or of bisphenol F as epoxy compounds and metal complex compounds of the general formula M(PHal)ₘ and M(PHal)ₘ(N)ₙ as hardeners.

5. Use of the mixtures according to Claims 1 to 4 for producing high-quality electrical laminates.

6. Use of the mixtures according to Claims 1 to 4 for producing moulding compositions for RTM, RIM and comparable shaping processes.

7. Use of the mixtures according to Claims 1 to 4 as impregnating resins in winding processes.

## Revendications

1. Mélanges durcissables comprenant des résines cyanate et des composés époxyde, **caractérisés en ce qu'**ils comprennent, en tant qu'agents de durcissement, des composés complexes métalliques de formules générales
MLₓB_{y}, M[SR]ₓB_{z}, M[SR]ₓ(N)ₙ, M(PHal)ₘ ou M(PHal)ₘ(N)ₙ
dans lesquelles
M représente un cation d'un métal complexant,
SR représente un radical acide organique ou inorganique,
L représente un ligand chélatant,
B représente une base de Lewis,
PHal représente un ion d'un pseudohalogénure,
N représente une base azotée,
x représente un nombre de 1 à 8,
y représente un nombre de 1 à 5,
z représente un nombre de 7 à 8,
m représente un nombre de 2 à 3,
n représente un nombre de 1 à 2.

2. Mélanges selon la revendication 1, **caractérisés en ce qu'**ils comprennent, en tant que composés époxyde, l'éther diglycidylique des bisphénols.

3. Mélanges selon la revendication 2, **caractérisés en ce qu'**ils comprennent, en tant que composés époxyde, l'éther diglycidylique du bisphénol A ou du bisphénol F.

4. Mélanges selon les revendications 1 à 3, **caractérisés en ce qu'**ils comprennent, en tant que composés époxyde, l'éther diglycidylique du bisphénol A ou du bisphénol F et, en tant qu'agents de durcissement, des composés complexes métalliques de formules générales M(PHal)ₘ et M(PHal)ₘ(N)ₙ.

5. Utilisation des mélanges selon les revendications 1 à 4 pour la production de stratifiés électriques de haute qualité.

6. Utilisation des mélanges selon les revendications 1 à 4 pour la production de compositions de moulage destinées aux procédés RTM, RIM et à des procédés de façonnage comparables.

7. Utilisation des mélanges selon les revendications 1 à 4 en tant que résines d'imprégnation dans des procédés d'enroulement.
